# EUROPÄISCHE PATENTSCHRIFT

(11) **EP 2 236 239 B1**
(45) Veröffentlichungstag und Bekanntmachung des Hinweises auf die Patenterteilung: **08.05.2013**
(21) Anmeldenummer: 10157559.5
(22) Anmeldetag: 24.03.2010
(51) Int. Cl.: B23K 26/18, B23K 26/38

(54) **Abdeckvorrichtung für ein mittels eines Lasers zu bearbeitendes Werkstück**
Covering device for a workpiece to be processed using a laser
Dispositif de recouvrement pour une pièce usinée à traiter par laser

(30) Priorität: 27.03.2009 DE 102009015401
(43) Veröffentlichungstag der Anmeldung: 06.10.2010
(73) Patentinhaber: MTU Aero Engines GmbH, 80995 München (DE)
(72) Erfinder: Schur, Stefan, 80686 München (DE)

(56) Entgegenhaltungen:
- EP-A1- 0 454 223
- EP-A2- 1 236 534
- WO-A1-2004/060603
- DE-A1- 10 249 756
- DE-A1- 19 832 774
- DE-T2- 69 603 920

## Beschreibung

Die Erfindung betrifft eine Abdeckvorrichtung für ein mittels eines Lasers zu bearbeitendes Werkstück, insbesondere Schaufel für ein Flugzeugtriebwerk, das einen über mindestens eine Öffnung von Außen zugänglichen Hohlraum aufweist sowie mindestens eine in mindestens einem ersten Bereich mit dem Laser zu bearbeitende Wand umfasst, die eine dem Laser beim Bearbeiten zugewandte Vorderseite und eine dem Laser beim Bearbeiten abgewandte Rückseite aufweist, wobei die Abdeckvorrichtung beim Bearbeiten zumindest auf Höhe des ersten Bereichs an der Rückseite der Wand des Werkstücks im Wesentlichen flächig anliegend festgelegt ist.

Das Verwenden von Lasern zum Bohren bzw. Einarbeiten von Bohrungen in ein Werkstück hat insbesondere bei der Herstellung von Flugzeugtriebwerkskomponenten Anwendung gefunden, bei denen beispielsweise in hohle Schaufeln Kühlfilm-Austrittsöffnungen gebohrt werden. Eine mit dem Laserbohren verbundene Schwierigkeit besteht darin, eine Beeinträchtigung der gegenüberliegenden Wand zu verhindern, wenn der Laserstrahl durch die gebohrte Wand hindurchbricht. Insbesondere bei Turbinenschaufeln für Flugzeugtriebwerke ist jegliche Beschädigung unerwünscht und nach Möglichkeit zu vermeiden. Dem vorzubeugen wird die Abdeckvorrichtung auf der Rückseite der mit dem Laser zu bohrenden Wand befestigt.

Aus DE 696 03 920 T2 ist bekannt Natriumchlorid in feinverteilter kristalliner Form in den Hohlraum des zu bohrenden Werkstücks als Abdeckvorrichtung einzubringen. Um das Natriumchlorid beim Bohren im Hohlraum festlegen zu können, müssen Stopfen vorgesehen werden, die die Öffnung verschließen. Um zu gewährleisten, dass sich beim Bearbeiten auf der Rückseite der Wand auf Höhe des ersten Bereichs Natriumchlorid befindet, muss der gesamte Hohlraum befüllt werden. Hierbei hat sich das Einfüllen und Entfernen des Natriumchlorids als umständlich erwiesen. Insbesondere Rückstände des Natriumchlorids im Hohlraum des Werkstücks müssen ausgewaschen werden, was aufwendig ist.

EP 0 454 223 A1 verwendet ein flüssiges Monomer als Abdeckvorrichtung, das in den Hohlraum des Werkstücks eingefüllt wird und mittels eines Initiators chemisch zu einem festen Polymer umgewandelt wird. Dies ist zeitaufwendig und nach dem Bohren umständlich zu entfernen.

Der vorliegenden Erfindung liegt die Aufgabe zugrunde, eine Abdeckvorrichtung vorzuschlagen, bei der die Handhabung vereinfacht ist und der Zeitbedarf bei der Montage und Demontage reduziert ist.

Die Aufgabe wir durch eine erfindungsgemäße Abdeckvorrichtung gelöst, bei der die Abdeckvorrichtung eine Halteeinrichtung aufweist mit der sie am Werkstück festlegbar und von diesem werkzeuglos wieder entfernbar ist.

Unter der mindestens einen Wand des Werkstücks wird eine jede Wand des Werkstücks verstanden, die mittels des Lasers gebohrt werden soll und die durch die Abdeckvorrichtung auf ihrer Rückseite abzudecken ist, um einer ungewollten Beschädigung anderer Wände vorzubeugen. Umfasst das Werkstück beispielsweise eine Schaufel für ein Flugzeugtriebwerk kann es sich bei der Wand sowohl um die den Hohlraum umgebende Wandung als auch um die Schaufelbänder handeln. Vorteilhaft hierbei ist, dass die Abdeckvorrichtung an der Rückseite der Wand flächig anliegt, wodurch eine hohe Qualität der Bohrung erreicht wird und zugleich einfach und schnell an der Wand festlegbar und nach dem Bohren wieder entfernbar ist.

Grundsätzlich ist es denkbar, dass die Halteeinrichtung als separates Teil lösbar mit der Abdeckvorrichtung verbunden ist. Bevorzugt wird allerdings, dass Halteeinrichtung und Abdeckvorrichtung ein einziges Teil umfassen.

Es erweist sich als vorteilhaft wenn die Abdeckvorrichtung einen im Wesentlichen laserabsorbierenden Kunststoff, insbesondere Nitril-Butadien-Kautschuk (NBR) umfasst und/oder einen im Wesentlichen laserreflektierenden Kunststoff, insbesondere Polyoxymethylen (POM) umfasst. Wenn die Abdeckvorrichtung einen laserabsorbierenden Kunststoff umfasst wird die Energie des Lasers nach dem Durchbruch von der Abdeckvorrichtung aufgenommen. Wenn die Abdeckvorrichtung einen laserreflektierenden Kunststoff umfasst ist die Gefahr eines lokalen Zerstörens der Abdeckvorrichtung durch den Laser, wenn er durch die Wand durchbricht, reduziert, was ein häufiges Wiederverwenden der Abdeckvorrichtung für mehrere zu bohrende Werkstücke ermöglicht.

In Weiterbildung der Erfindung ist die Abdeckvorrichtung im Wesentlichen komplementär zur Rückseite der jeweiligen Wand des Werkstücks ausgebildet. Die Abdeckvorrichtung kann beispielsweise durch den Abguss eines mittels CAD erstellten Abguss' hergestellt werden. Vorteilhaft hierbei ist, dass sogenannter Recast, der durch ungünstige Sublimationsverteilung am Bohrungsaustritt entstehen kann bei angepasster flächig am ersten Bereich anliegender Abdeckvorrichtung reduziert ist. Hierdurch wird eine hohe Qualität der Bohrung, insbesondere eine günstigere Bohrungsform bei großen Durchmessern erreicht.

Darüber hinaus ist in Weiterbildung der Erfindung vorgesehen, dass die Abdeckvorrichtung mindestens einen ersten Einschub und/oder einen zweiten Einschub aufweist, der durch eine der mindestens einen Öffnung des Werkstücks in den Hohlraum einführbar und mittels jeweils eines ersten Haltemittels der Halteeinrichtung klemmend gegen die Rückseite der Wand festlegbar ist. Zum bekannten Stand der Technik erweist es sich als vorteilhaft, dass zusätzlich zur Abdeckvorrichtung keine weiteren Bauteile wie beispielsweise Stopfen zum Festlegen der Abdeckvorrichtung im Hohlraum benötigt werden.

Im Bereich der Endkonturen des Einschubs ist es denkbar, dass nicht genügend Material im Bereich der Wand vorhanden ist, um den Laser nach dem Durchbruch durch die Wand effektiv zu kompensieren. Hier erweist es sich als vorteilhaft, wenn der erste Einschub und/oder der zweite Einschub an seinen Endkonturen, insbesondere am in Einführrichtung vorderen Ende, ein laserreflektierendes Material aufweist.

Ferner ist bei einem Ausführungsbeispiel das erste Haltemittel der Halteeinrichtung durch ein Aufmaß des ersten Einschubs bezüglich des Hohlraums des Werkstücks gebildet, so dass sich der erste Einschub beim Einführen in den Hohlraum des Werkstücks selbsttätig gegen die Rückseite der Wand des Werkstücks klemmt. Hierdurch kann die Abdeckvorrichtung lokal positioniert werden, ohne dass der gesamte Hohlraum mit der Abdeckvorrichtung gefüllt werden muss.

Alternativ zu letztgenannter Weiterbildung erweist es sich bei Hohlräumen mit komplexer Geometrie der Rückseite der Wand als vorteilhaft, wenn das erste Haltemittel der Halteeinrichtung durch den zweiten Einschub und einen Stecker gebildet ist, wobei der zweite Einschub bezüglich des Hohlraums untermaßig ausgebildet ist und eine in Einführrichtung erstreckte Öffnung aufweist in die der Stecker einführbar ist, so dass das aus zweitem Einschub und in diesen eingeführten Stecker gebildete System bezüglich des Hohlraums ein Aufmaß aufweist, wodurch der zweite Einschub gegen die Rückseite der Wand des Werkstücks geklemmt wird. Hierdurch kann der zweite Einschub einfach eingeführt werden und sich durch das Einführen des Steckers an die komplexe Geometrie der Rückseite flächig anlegen. Nach dem Bohren wird der Stecker aus dem zweiten Einschub entfernt, wodurch der zweite Einschub einfach und werkzeuglos aus dem Hohlraum entfernt werden kann.

Darüber hinaus ist in Weiterbildung der Erfindung vorgesehen, dass die Abdeckvorrichtung mindestens eine Abdeckmaske mit einem zweiten Haltemittel der Halteeinrichtung umfasst, das durch einen mehrfach abgewinkelten Rand der Abdeckmaske gebildet ist, so dass der Rand, wenn die Abdeckmaske an der Rückseite der Wand des Werkstücks festgelegt ist, die Wand hintergreift und zumindest bereichsweise an der Vorderseite der Wand anliegt. Umfasst das Werkstück eine Schaufel mit Schaufelbändern für ein Flugzeugtriebwerk kann die Abdeckmaske werkzeuglos an die Schaufelbänder geclipst werden und nach dem Laserbohren der Schaufelbänder werkzeuglos wieder entfernt werden.

Eine Weiterbildung letztgenannten Erfindungsgedankens sieht vor, dass die Abdeckmaske im Bereich einer Öffnung zum Hohlraum des Werkstücks eine Durchbrechung aufweist, durch die der erste Einschub und/oder der zweite Einschub in den Hohlraum des Werkstücks einführbar ist.

Ferner erweist es sich als vorteilhaft, wenn der Stecker einen Absatz aufweist, der, wenn er in den zweiten Einschub eingeführt ist, an der Abdeckmaske anliegt und diese zusätzlich zum zweiten Haltemittel an der Rückseite der Wand des Werkstücks festlegt.

Schließlich ist bei einer Weiterbildung der Erfindung vorgesehen, dass die Abdeckvorrichtung mindestens einen Bereich mit reduzierter Materialdicke oder einen Bereich mit einer durchgehenden Aussparung aufweist, so dass eine hinter der Abdeckvorrichtung angeordnete weitere Wand durch die Abdeckvorrichtung hindurch mit dem Laser bearbeitbar ist.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung. In der Zeichnung zeigen:
- Figur 1: eine explosionsartige perspektivische Darstellung eines Werkstücks mit Abdeckvorrichtung;
- Figur 2: eine perspektivische Darstellung eines Einschubs mit einem in diesen eingeführten Stecker;
- Figur 3: eine perspektivische Darstellung eines Werkstücks mit montierter Abdeckvorrichtung;
- Figur 4: eine perspektivische Schnittdarstellung eines Werkstücks mit montierter Abdeckvorrichtung;
- Figur 5: eine perspektivische Darstellung eines Werkstücks mit montierter Abdeckvorrichtung nach dem Laserbohren.

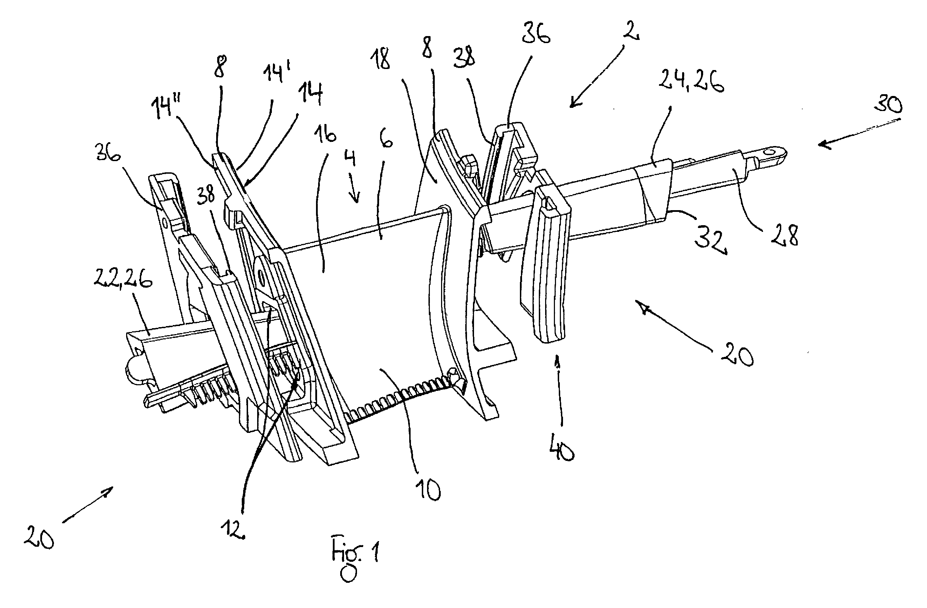

Die Figuren 1 bis 5 zeigen eine insgesamt mit dem Bezugszeichen 2 versehene Abdeckvorrichtung für ein mittels eines Lasers (nicht dargestellt) zu bearbeitendes Werkstück 4. Das in den Figuren dargestellte Werkstück 4 umfasst eine Schaufel 6 mit seitlich an der Schaufel 6 angeordneten Schaufelbändern 8 für ein Flugzeugtriebwerk. Das Werkstück 4 weist einen Hohlraum 10, der über Öffnungen 12 von außen zugänglich ist und mindestens eine Wand 14, 16, 18 auf, die eine dem Laser beim Bearbeiten zugewandte Vorderseite sowie eine dem Laser beim Bearbeiten abgewandte Rückseite aufweist.

Beim Bearbeiten des Werkstücks 4 ist die Abdeckvorrichtung 2 jeweils an der Rückseite der zu bearbeitenden Wand 14, 16, 18 des Werkstücks 4 durch eine insgesamt mit dem Bezugszeichen 20 bezeichnete Halteeinrichtung festgelegt, mit der die Abdeckvorrichtung 2 werkzeuglos am Werkstück 4 festlegbar und werkzeuglos wieder entfernbar ist.

Ein Ausführungsbeispiel gemäß Figur 1 zeigt eine Abdeckvorrichtung 2, die einen ersten Einschub 22 und einen zweiten Einschub 24 mit jeweils einem ersten Haltemittel 26 aufweist. Die Einschübe 22, 24 sind in den Hohlraum 10 der Werkstücks 4 durch die Öffnungen 12 einführbar und mittels des ersten Haltemittels 26 darin festlegbar.

Beim ersten Einschub 22 ist das erste Haltemittel 26 durch ein Aufmaß bezüglich des Hohlraums 10 des Werkstücks 4 gebildet, so dass der erste Einschub 22 gegen die Rückseite der Wand 16 selbsttätig klemmt.

Beim Einschub 24 ist das erste Haltemittel 26 durch den zweiten Einschub 24 und einen Stecker 28 gebildet. Der zweite Einschub 24 ist untermaßig bezüglich des Hohlraums 10 ausgebildet und weist eine in Einführrichtung 30 erstreckte Öffnung 32 auf, in die der Stecker 28 einführbar ist. Der Stecker 28 spreizt den zweiten Einschub 24 beim Einführen nach Außen auf, so dass der zweite Einschub 24 bezüglich des Hohlraums 10 ein Aufmaß aufweist und sich klemmend gegen die Rückseite der Wand 14 flächig festlegt. Der Stecker 28 weist an seinem, im eingeführten Zustand freien Ende einen Griff 34 auf, mit dem er werkzeuglos aus dem zweiten Einschub 24 entfernbar ist.

Darüber hinaus weist die Abdeckvorrichtung 2 zwei, jeweils den Rückseiten der Schaufelbänder 8 des Werkstücks 4 komplementär ausgebildete Abdeckmasken 36 auf, die jeweils mit einem durch einen mehrfach abgewinkelten Rand 38 der Abdeckmaske 36 gebildeten zweiten Haltemittel 40 an der Rückseite der Wand 14, 18 festgelegt werden können. Am Beispiel von Wand 14 betrachtet hintergreift der Rand 38 der Abdeckmaske 36 die Wand 14, so dass er an der Vorderseite 14' der Wand 14 anliegt und die Abdeckmaske 36 an der Rückseite 14" der Wand 14 festlegt.

Um ein Einführen des ersten Einschubs 22 und/oder des zweiten Einschubs 24 auch dann zu ermöglichen, wenn die Abdeckmaske 36 bereits montiert ist, weist die Abdeckmaske 36 im Bereich der Öffnung 12 des Werkstücks 4 einen Durchbruch 42 auf durch den der Einschub 22, 24 in den Hohlraum 10 des Werkstücks 4 einführbar ist.

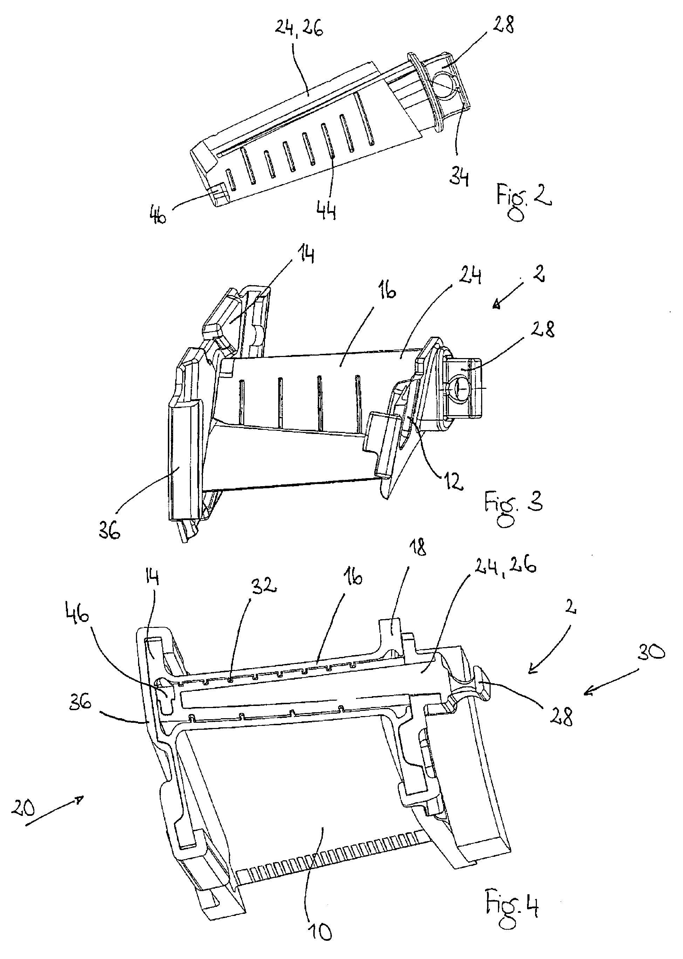

Figur 2 zeigt den zweiten Einschub 24 in den der Stecker 28 eingeführt ist. Um ein Dehnen des zweiten Einschubs 24 beim Einführen des Steckers 28 zu erleichtern, weist der zweite Einschub 24 Dehnfugen 44 auf. Der zweite Einschub 24 ist bezüglich des Hohlraums 10 untermaßig ausgebildet, was ein leichtes Einführen des zweiten Einschubs 24 bei komplexer Geometrie der Rückseite der Wand 16 ermöglicht.

Der zweite Einschub 24 besteht im Wesentlichen auch laserabsorbierenden Kunststoff. In seinen Randkonturen, insbesondere am in Einführrichtung 30 vorderen Ende des zweiten Einschubs 24 ist ein laserreflektierendes Material 46 angeordnet. Dies ermöglicht ein Bearbeiten eines Bereichs der Wand 14, 16, 18 an der wenig Material der Abdeckvorrichtung 2 angeordnet werden kann.

Die Figuren 3 und 4 zeigen die Abdeckvorrichtung 2 mit montierten Abdeckmasken 36 und zweitem Einschub 24, die jeweils flächig an den Rückseiten der zu bohrenden Wände 14, 16, 18 anliegen. Der in den Einschub 24 eingeführte Stecker 28 weist einen Absatz 43 auf, mit dem er an der Abdeckmaske 36 anliegt und diese zusätzlich zum zweiten Haltemittel 40 an der Rückseite der Wand 18 des Werkstücks 4 festlegt.

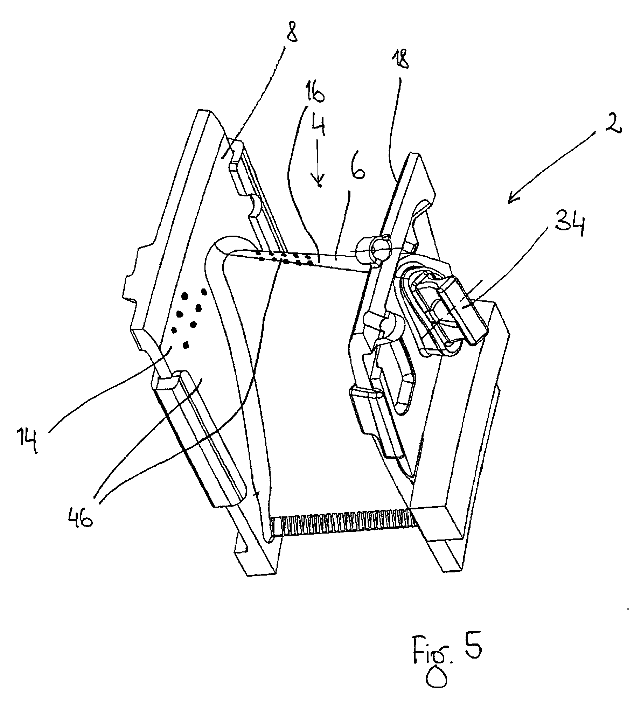

Figur 5 zeigt die am Werkstück 4 montierte Abdeckvorrichtung 2 nach dem Bohren des Werkstücks mit einer Vielzahl an Bohrungen 46.

## Patentansprüche

1. Abdeckvorrichtung (2) für ein mittels eines Lasers zu bearbeitendes Werkstück (4), insbesondere Schaufel (6) für ein Flugzeugtriebwerk, das einen über mindestens eine Öffnung (12) von Außen zugänglichen Hohlraum (10) aufweist sowie mindestens eine in mindestens einem ersten Bereich mit dem Laser zu bearbeitende Wand (14, 16, 18) umfasst, die eine dem Laser beim Bearbeiten zugewandte Vorderseite und eine dem Laser beim Bearbeiten abgewandte Rückseite aufweist, wobei die Abdeckvorrichtung (2) beim Bearbeiten zumindest auf Höhe des ersten Bereichs an der Rückseite der Wand (14, 16, 18) des Werkstücks (4) im Wesentlichen flächig anliegend festgelegt ist, **dadurch gekennzeichnet, dass** die Abdeckvorrichtung (2) eine Halteeinrichtung (20) aufweist mit der sie am Werkstück (4) festlegbar und von diesem werkzeuglos wieder entfernbar ist.

2. Abdeckvorrichtung (2) nach Anspruch 1, **dadurch gekennzeichnet, dass** die Abdeckvorrichtung (2) einen im Wesentlichen laserabsorbierenden Kunststoff, insbesondere Nitril-Butadien-Kautschuk (NBR) umfasst und/oder einen im Wesentlichen laserreflektierenden Kunststoff, insbesondere Polyoxymethylen (POM) umfasst.

3. Abdeckvorrichtung (2) nach einem der Ansprüche 1 oder 2, **dadurch gekennzeichnet, dass** die Abdeckvorrichtung (2) im Wesentlichen komplementär zur Rückseite der jeweiligen Wand (14, 16, 18) des Werkstücks (4) ausgebildet ist.

4. Abdeckvorrichtung (2) nach einem der Ansprüche 1 bis 3, **dadurch gekennzeichnet, dass** die Abdeckvorrichtung (2) mindestens einen ersten Einschub (22) und/oder einen zweiten Einschub (24) aufweist, der durch eine der mindestens einen Öffnung (12) des Werkstücks (4) in den Hohlraum (10) einführbar und mittels jeweils eines ersten Haltemittels (26) der Halteeinrichtung (20) klemmend gegen die Rückseite der Wand (16) festlegbar ist.

5. Abdeckvorrichtung (2) nach Anspruch 4, **dadurch gekennzeichnet, dass** der erste Einschub (22) und/oder der zweite Einschub (24) an seinen Endkonturen, insbesondere am in Einführrichtung (30) vorderen Ende, ein laserreflektierendes Material (46) aufweist.

6. Abdeckvorrichtung (2) nach einem der Ansprüche 4 oder 5, **dadurch gekennzeichnet, dass** das erste Haltemittel (26) der Halteeinrichtung (20) durch ein Aufmaß des ersten Einschubs (22) bezüglich des Hohlraums (10) des Werkstücks (4) gebildet ist, so dass sich der erste Einschub (22) beim Einführen in den Hohlraum (10) des Werkstücks (4) selbsttätig gegen die Rückseite der Wand (16) des Werkstücks (4) klemmt.

7. Abdeckvorrichtung (2) nach einem der Ansprüche 4 bis 6, **dadurch gekennzeichnet, dass** das erste Haltemittel (26) der Halteeinrichtung (20) durch den zweiten Einschub (24) und einen Stecker (28) gebildet ist, wobei der zweite Einschub (24) bezüglich des Hohlraums (10) untermaßig ausgebildet ist und eine in Einführrichtung (30) längserstreckte Öffnung (32) aufweist in die der Stecker (28) einführbar ist, wodurch das aus zweitem Einschub (24) und in diesen eingeführte Stecker (28) gebildete System bezüglich des Hohlraums (10) ein Aufmaß aufweist, wodurch der zweite Einschub (24) gegen die Rückseite der Wand (16) des Werkstücks (4) geklemmt wird.

8. Abdeckvorrichtung (2) nach einem der Ansprüche 1 bis 7, **dadurch gekennzeichnet, dass** die Abdeckvorrichtung (2) mindestens eine Abdeckmaske (36) mit einem zweiten Haltemittel (40) der Halteeinrichtung (20) umfasst, das durch einen mehrfach abgewinkelten Rand (38) der Abdeckmaske (36) gebildet ist, so dass der Rand (38), wenn die Abdeckmaske (36) an der Rückseite der Wand (14, 18) des Werkstücks (4) festgelegt ist, die Wand (14, 18) hintergreift und zumindest bereichsweise an der Vorderseite der Wand (14, 18) anliegt.

9. Abdeckvorrichtung (2) nach Anspruch 8, **dadurch gekennzeichnet, dass** die Abdeckmaske (36) im Bereich einer Öffnung (12) zum Hohlraum (10) des Werkstücks (4) eine Durchbrechung (42) aufweist, durch die der erste Einschub (22) und/oder der zweite Einschub (24) in den Hohlraum (10) des Werkstücks (4) einführbar ist.

10. Abdeckvorrichtung (2) nach Anspruch 8 oder 9, **dadurch gekennzeichnet, dass** der Stecker (28) einen Absatz (43) aufweist, der, wenn er in den zweiten Einschub (24) eingeführt ist, an der Abdeckmaske (36) anliegt und diese zusätzlich zum zweiten Haltemittel (40) an der Rückseite der Wand (18) des Werkstücks (4) festlegt.

11. Abdeckvorrichtung (2) nach einem der Ansprüche 1 bis 10, **dadurch gekennzeichnet, dass** die Abdeckvorrichtung (2) mindestens einen Bereich mit reduzierter Materialdicke oder einen Bereich mit einer durchgehenden Aussparung aufweist, so dass eine hinter der Abdeckvorrichtung (2) angeordnete weitere Wand durch die Abdeckvorrichtung (2) hindurch mit dem Laser bearbeitbar ist.

## Claims

1. A covering device (2) for a workpiece (4), in particular a blade (6) for an aircraft engine, that is to be processed by means of a laser and has a cavity (10) accessible from outside by way of at least one opening (12) and also comprises at least one wall (14, 16, 18) that is to be processed with the laser in at least one first region and has a front side facing the laser during the processing and a rear side remote from the laser during the processing, wherein the covering device (2) is fixed during the processing at least at the level of the first region so that it rests in a substantially areal manner against the rear side of the wall (14, 16, 18) of the workpiece (4), **characterised in that** the covering device (2) has a holding device (20) with which it can be fixed on the workpiece (4) and can be removed again from it without any tools.

2. A covering device (2) according to claim 1, **characterised in that** the covering device (2) comprises a substantially laser-absorbing plastics material, in particular nitrile butadiene rubber (NBR), and/or a substantially laser-reflecting plastics material, in particular polyoxymethylene (POM).

3. A covering device (2) according to one of claims 1 or 2, **characterised in that** the covering device (2) is formed so as to be substantially complementary to the rear side of the respective wall (14, 16, 18) of the workpiece (4).

4. A covering device (2) according to one of claims 1 to 3, **characterised in that** the covering device (2) has at least one first insert (22) and/or a second insert (24) that can be introduced into the cavity (10) through one of the openings (12) of the workpiece (4) of which there is at least one and can be fixed in a clamping manner against the rear side of the wall (16) by means of, in each case, a first holding means (26) of the holding device (20).

5. A covering device (2) according to claim 4, **characterised in that** the first insert (22) and/or the second insert (24) have/has a laser-reflecting material (46) at its end contours, in particular at the end that is at the front in the direction of introduction (30).

6. A covering device (2) according to one of claims 4 or 5, **characterised in that** the first holding means (26) of the holding device (20) is formed by an overmeasure of the first insert (22) with respect to the cavity (10) of the workpiece (4) so that the first insert (22) upon introduction into the cavity (10) of the workpiece (4) is automatically clamped against the rear side of the wall (16) of the workpiece (4).

7. A covering device (2) according to one of claims 4 to 6, **characterised in that** the first holding means (26) of the holding device (20) is formed by the second insert (24) and a plug (28), wherein the second insert (24) is formed in an undersized manner with respect to the cavity (10) and has an opening (32) which is longitudinally extended in the direction of introduction (30) and into which the plug (28) can be introduced, whereby the system formed of the second insert (24) and the plug (28) introduced into the latter has an overmeasure with respect to the cavity (10), whereby the second insert (24) is clamped against the rear side of the wall (16) of the workpiece (4).

8. A covering device (2) according to one of claims 1 to 7, **characterised in that** the covering device (2) comprises at least one covering mask (36) with a second holding means (40) of the holding device (20) that is formed by a multiply angled edge (38) of the covering mask (36) so that the edge (38), when the covering mask (36) is fixed on the rear side of the wall (14, 18) of the workpiece (4), engages behind the wall (14, 18) and rests against the front side of the wall (14, 18) at least in regions.

9. A covering device (2) according to claim 8, **characterised in that** the covering mask (36) has in the region of an opening (12) to the cavity (10) of the workpiece (4) a breakthrough (42), through which the first insert (22) and/or the second insert (24) can be introduced into the cavity (10) of the workpiece (4).

10. A covering device (2) according to claim 8 or 9, **characterised in that** the plug (28) has a shoulder (43) which, when it is introduced into the second insert (24), rests against the covering mask (36) and fixes this, in addition to the second holding means (40), on the rear side of the wall (18) of the workpiece (4).

11. A covering device (2) according to one of claims 1 to 10, **characterised in that** the covering device (2) has at least one region with reduced material thickness or a region with a continuous recess so that a further wall that is arranged behind the covering device (2) can be processed by the laser through the covering device (2).

## Revendications

1. Dispositif de recouvrement (2) pour une pièce à usiner (4) devant être traitée par laser, en particulier une aube (6) pour une turbine d'avion, qui présente une cavité (10) accessible de l'extérieur par l'intermédiaire d'au moins une ouverture (12) et qui comprend également au moins une paroi (14, 16, 18) devant être traitée par laser dans au moins une première zone, laquelle paroi présente un côté avant tourné vers le laser lors du traitement et un côté arrière opposé au laser lors du traitement, le dispositif de recouvrement (2) étant fixé lors du traitement de manière à reposer essentiellement à plat, au moins à la hauteur de la première zone au niveau du côté arrière de la paroi (14, 16, 18) de la pièce à usiner (4), **caractérisé en ce que** le dispositif de recouvrement (2) présente un système de retenue (20), lequel permet de fixer ledit dispositif de recouvrement au niveau de la pièce à usiner (4) et de le retirer de cette dernière sans outil.

2. Dispositif de recouvrement (2) selon la revendication 1, **caractérisé en ce que** le dispositif de recouvrement (2) comprend une matière synthétique absorbant essentiellement le laser, en particulier du caoutchouc nitrile-butadiène (NBR) et/ou une matière synthétique réfléchissant essentiellement le laser, en particulier du polyoxyméthylène (POM),

3. Dispositif de recouvrement (2) selon l'une quelconque des revendications 1 ou 2, **caractérisé en ce que** le dispositif de recouvrement (2) est réalisé essentiellement de manière complémentaire au côté arrière de la paroi respective (14, 16, 18) de la pièce à usiner (4).

4. Dispositif de recouvrement (2) selon l'une quelconque des revendications 1 à 3, **caractérisé en ce que** le dispositif de recouvrement (2) présente au moins une première plaque insérable (22) et/ou une deuxième plaque insérable (24), qui peut être introduite dans la cavité (10) à travers une des ouvertures (12) de la pièce à usiner (4) et qui peut être fixée par serrage contre le côté arrière de la paroi (16) au moyen de respectivement un premier moyen de retenue (26) du système de retenue (20).

5. Dispositif de recouvrement (2) selon la revendication 4, **caractérisé en ce que** la première plaque insérable (22) et/ou la deuxième plaque insérable (24) présentent au niveau de leurs contours d'extrémité, en particulier au niveau de l'extrémité avant dans le sens d'introduction (30), un matériau (46) réfléchissant le laser.

6. Dispositif de recouvrement (2) selon l'une quelconque des revendications 4 ou 5, **caractérisé en ce que** le premier moyen de retenue (26) du système de retenue (20) est formé par une surépaisseur de la première plaque insérable (22) par rapport à la cavité (10) de la pièce à usiner (4) si bien que la première plaque insérable (22) se serre de manière autonome contre le côté arrière de la paroi (16) de la pièce à usiner (4) lors de l'introduction dans la cavité (10) de la pièce à usiner (4)

7. Dispositif de recouvrement (2) selon l'une quelconque des revendications 4 à 6, **caractérisé en ce que** le premier moyen de retenue (26) du système de retenue (20) est formé par la deuxième plaque insérable (24) et par un connecteur (28), la deuxième plaque insérable (24) étant réalisée de manière sous-dimensionnée par rapport à la cavité (10) et présentant une ouverture (32) allongée dans le sens d'introduction (30), dans laquelle peut être introduit le connecteur (28), ce qui fait que le système formé à partir de la deuxième plaque insérable (24) et du connecteur (28) introduit dans cette dernière présente par rapport à la cavité (10) une surépaisseur, ce qui permet de serrer la deuxième plaque insérable (24) contre le côté arrière de la paroi (16) de la pièce à usiner (4).

8. Dispositif de recouvrement (2) selon l'une quelconque des revendications 1 à 7, **caractérisé en ce que** le dispositif de recouvrement (2) comprend au moins un masque de recouvrement (36) doté d'un deuxième moyen de retenue (40) du système de retenue (20), lequel moyen de retenue est formé par un bord (36), coudé à plusieurs reprises, du masque de recouvrement (36), si bien que le bord (38), lorsque le masque de recouvrement (36) est fixé au niveau du côté arrière de la paroi (14, 18) de la pièce à usiner (4), vient en prise par l'arrière avec la paroi (14, 18) et repose au moins par endroits au niveau du côté avant de la paroi (14, 18).

9. Dispositif de recouvrement (2) selon la revendication 8, **caractérisé en ce que** le masque de recouvrement (36) présente dans la zone d'une ouverture (12) en direction de la cavité (10) de la pièce à usiner (4) un trou traversant(42), à travers lequel la première plaque insérable (22) et/ou la deuxième plaque insérable (24) peuvent être introduites dans la cavité (10) de la pièce à usiner (4).

10. Dispositif de recouvrement (2) selon la revendication 8 ou 9, **caractérisé en ce que** le connecteur (28) présente un talon (43) qui, lorsqu'il est introduit dans la deuxième plaque insérable (24), repose contre le masque de recouvrement (36) et fixe ce dernier en plus du deuxième moyen de retenue (40) au niveau du côté arrière de la paroi (18) de la pièce à usiner (4).

11. Dispositif de recouvrement (2) selon l'une quelconque des revendications 1 à 10, **caractérisé en ce que** le dispositif de recouvrement (2) présente au moins une zone avec une épaisseur de matériau réduite ou une zone avec un évidement traversant si bien qu'une autre paroi disposée derrière le dispositif de recouvrement (2) peut être traitée par laser à travers le dispositif de recouvrement (2).
